# EUROPÄISCHE PATENTANMELDUNG

(11) **EP 2 783 559 A2**
(43) Veröffentlichungstag der Anmeldung: **01.10.2014**
(21) Anmeldenummer: 14000446.6
(22) Anmeldetag: 07.02.2014
(51) Int. Cl.: A01B 59/043

(54) **Drei-Punkt-Aufhängung eines Ackerschleppers**

(30) Priorität: 08.02.2013 DE 202013001188 U
(71) Anmelder: JRS GmbH & Co. KG, 85119 Ernsgaden (DE)
(72) Erfinder: Sauermann, Johann, 85119 Ernsgaden (DE)
(74) Vertreter: Witzany, Manfred

(57) **Zusammenfassung**

Eine Drei-Punkt-Aufhängung (1) eines Ackerschleppers dient zum Befestigen eines Gerätes (13). Die Drei-Punkt-Aufhängung (1) weist Unterlenker (2) und einen Oberlenker (3) auf, wobei die Unterlenker (2) an ihren Endbereichen (4) Haken (5, 6) zum Halten des Gerätes (13) aufweisen. Diese Haken (5, 6) weisen jeweils mindestens einen Hakenkörper (8) und mindestens einen Deckel (16) auf, zwischen denen mindestens ein Aufnahmeraum (9) zur Aufnahme eines Verschlussmechanismus (10) vorgesehen ist. Zur Erhöhung der Belastbarkeit dieser Drei-Punkt-Aufhängung (1) sind die Haken (5, 6) unterschiedlich aufgebaut, wobei die Deckel (16) beider Haken (5, 6) symmetrisch zu einer durch den Oberlenker (3) verlaufenden Vertikalebene (3') angeordnet sind.

## Beschreibung

Die Erfindung betrifft eine Drei-Punkt-Aufhängung eines Ackerschleppers zum Befestigen eines Gerätes.

Aus der US 2001/0037759 A1 ist eine gattungsgemäße Drei-Punkt-Aufhängung bekannt. Diese besteht aus zwei Unterlenkern und einem Oberlenker, die jeweils an ihren Enden Haken aufweisen. Jeder der Haken besteht aus einem Hakenkörper und einem Deckel. Zwischen beiden ist ein Aufnahmeraum für einen Verschlussmechanismus vorgesehen. Dieser Verschlussmechanismus weist insbesondere eine Nocke auf, die das im Haken angekoppelte Gerät verriegelt. Dabei sind beide Haken identisch ausgebildet. Damit befindet sich einer der Deckel innenseitig und der andere außenseitig zur Drei-Punkt-Aufhängung. Diese Drei-Punkt-Aufhängung hat sich in der Praxis vielfach bewährt und bildet den Ausgangspunkt der vorliegenden Erfindung.

Der Erfindung liegt die Aufgabe zugrunde, eine Drei-Punkt-Aufhängung der eingangs genannten Art zu schaffen, die sich durch eine hohe Belastbarkeit auszeichnet.

Diese Aufgabe wird mit den folgenden Merkmalen gelöst.

Die erfindungsgemäße Drei-Punkt-Aufhängung eines Ackerschleppers dient zum Befestigen eines Gerätes. Die Art des Gerätes ist dabei grundsätzlich unerheblich. Hauptsächlich ist an landwirtschaftliche und forstwirtschaftliche Arbeitsgeräte wie Pflüge, Eggen, Heuwender, Dammfräsen oder Forstseilwinden gedacht. Diese Aufzählung ist jedoch nicht abschließend zu verstehen. Dieses Gerät weist vorzugsweise eine Quertraverse auf, an der Kupplungsglieder in Form von Kugeln angebracht sind, die in der Drei-Punkt-Aufhängung abgestützt sind. Die Drei-Punkt-Aufhängung weist Unterlenker und mindestens einen Oberlenker auf. Vorzugsweise bilden die Unter- und Oberlenker zusammen ein Dreieck, was eine stabile Aufhängung des angekuppelten Gerätes ermöglicht. Die Unterlenker weisen an ihren Endbereichen zum Halten des ankuppelbaren Gerätes Haken auf. Jeder dieser Haken besitzt dabei mindestens einen Hakenkörper und mindestens einen Deckel. Zwischen beiden ist mindestens ein Aufnahmeraum für einen Verschlussmechanismus vorgesehen. Der Hakenkörper ist vorzugsweise massiv ausgebildet, um hohe Stützlasten und hohe Zug- und Schubkräfte abstützen zu können. Diese Kräfte werden hauptsächlich durch den Hakenkörper in das Heck des Ackerschleppers eingeleitet. Der Aufnahmeraum ist erforderlich, um das ankuppelbare Gerät an der Drei-Punkt-Aufhängung verriegeln zu können. Ohne diesen Verschlussmechanismus könnte das angekuppelte Gerät während der Fahrt im öffentlichen Straßenverkehr oder während des Einsatzes verloren gehen. Beides muss unbedingt verhindert werden. Zu diesem Zweck besitzt der Verschlussmechanismus vorzugsweise eine Nocke, die oberseitig über das angekuppelte Gerät greift und damit eine Entnahme des Gerätes verhindert. Diese Nocke ist vorzugsweise in den Haken zurückziehbar ausgebildet, um das angekuppelte Gerät entnehmen bzw. ein neues Gerät ankuppeln zu können. Durch den Aufnahmeraum wird der Hakenkörper in seiner mechanischen Steifigkeit erheblich geschwächt, so dass häufig der mindestens eine Deckel zur Stabilisierung des Hakens gegenüber Biegemomenten genutzt wird. Dies hat zur Folge, dass der Verbindung zwischen dem mindestens einen Deckel einerseits und dem mindestens einen Hakenkörper andererseits besondere Aufmerksamkeit gewidmet werden muss. In der Regel wurde bisher hierbei eine Schweißverbindung eingesetzt, an deren Qualität hohe Anforderungen zu stellen sind. Diese Verbindung zwischen dem mindestens einen Deckel und dem mindestens einen Hakenkörper begrenzt die Belastbarkeit des gesamten Unterlenkers. Es war insbesondere nicht möglich, den Haken zu verbreitern, um auf diese Weise mehr Steifigkeit im Hakenkörper zu erzielen. Jede Verbreiterung des Hakens würde dazu führen, dass der Haken an einer Fangschale des angekuppelten Gerätes anstößt und damit das Gerät nicht mehr angekuppelt werden könnte.

Zur Lösung dieses Problems werden die Haken unterschiedlich aufgebaut, wobei die Deckel beider Haken symmetrisch zu einer durch den mindestens einen Oberlenker verlaufenden Vertikalebene angeordnet sind. Dies bedeutet, dass die Deckel entweder beide außenseitig oder beide innenseitig zur Drei-Punkt-Aufhängung vorgesehen sind. Dies ist bei gleich aufgebauten Haken grundsätzlich nicht realisierbar. Der Begriff "symmetrisch" ist hier und im Folgenden nicht als "spiegelsymmetrisch" im mathematischen Sinne zu verstehen, sondern legt nur die grundsätzliche Lage der Deckel fest. Diese Lösung scheint zunächst widersinnig zu sein, da das angekuppelte Gerät mit seiner Quertraverse einen konstanten, vorgegebenen Kupplungsabstand realisiert, der dem Abstand der Unterlenker entspricht. Damit kann das angekuppelte Gerät offensichtlich beide Unterlenker nur in der gleichen Richtung belasten, also je nach Belastungsfall beispielsweise beide Unterlenker nach links biegen. Für derartige Belastungsfälle würde die Maßnahme des symmetrischen Aufbaus der Haken gar keinen Vorteil liefern. Es stellte sich jedoch durch Experimente heraus, dass die Unterlenker im Betrieb einer erheblichen Torsionsbelastung ausgesetzt sind. Die Unterlenker werden durch die hohen Stützlasten des angekuppelten Gerätes um ihre Längsachse verwunden, wobei das Drehmoment des linken Unterlenkers zum Ackerschlepper und das Drehmoment des rechten Unterlenkers vom Ackerschlepper weg gerichtet ist. Diese besondere Belastungssituation führt zu einer wesentlich höheren Belastung der Innenseite des Unterlenkers als der Außenseite. Durch den symmetrischen Aufbau können die Haken nun so ausgebildet werden, dass sie im Bereich der höheren Belastung entsprechend fester ausgebildet sind als im Bereich der geringeren Belastung. Auf diese Weise kann die Belastbarkeit der Unterlenker erhöht werden, ohne dass Ankuppelprobleme mit bestehenden Geräten auftreten.

Vorzugsweise sind die Deckel jeweils außenseitig zur Drei-Punkt-Aufhängung angeordnet. Diese Maßnahme führt dazu, dass die Hakenkörper im kritischen Innenbereich - also im Bereich der zueinander gerichteten Wände - jeweils massiv und ohne Schweißnähte ausgebildet sind. Im unkritischeren Außenwandbereich sind die Haken zur Bildung des mindestens einen Aufnahmeraums geöffnet und durch den mindestens einen Deckel geschlossen. Die mechanischen Verbindungsstellen zwischen Hakenkörper und Deckel werden daher entsprechend weniger belastet, was diese Verbindungen entsprechend unkritischer macht.

Zur weiteren Verbesserung der Belastbarkeit der Drei-Punkt-Aufhängung ist vorgesehen, den mindestens einen Hakenkörper zumindest im Bereich des mindestens einen Aufnahmeraums zu verstärken. Eine derartige Verstärkung war bei Drei-Punkt-Aufhängungen nach dem Stand der Technik nicht realisierbar, da die Verstärkung bei identischen Haken einmal außenseitig und einmal innenseitig zu liegen käme. Bei innenseitiger Verstärkung entstünde jedoch wiederum das Problem, dass bestehende Geräte nicht mehr ankuppelbar wären. Im vorliegenden Fall ist dies jedoch unkritisch, da die Verstärkung jeweils außenseitig an den Haken angeordnet werden kann. Dort behindert sie die Ankupplung des Gerätes in keiner Weise.

Für die Verstärkung hat sich mindestens eine Rippe bewährt, die im Wesentlichen längs zum Unterlenker verläuft. Diese Rippe sorgt für eine gute Übertragung der Torsionsmomente, so dass sich eine besonders stabile Ausbildung der Drei-Punkt-Aufhängung ergibt. Vorzugsweise kann die mindestens eine Rippe so massiv ausgebildet sein, dass der mindestens eine Deckel zur Abstützung der Torsionsmomente gar nicht mehr erforderlich ist. Damit stehen für die Befestigung des Deckels beliebige Methoden zur Verfügung. Der mindestens eine Deckel könnte beispielsweise geklebt, verschraubt oder mittels Clipverschlusses befestigt werden.

Der Erfindungsgegenstand wird beispielhaft anhand der Zeichnung erläutert, ohne den Schutzumfang zu beschränken.

Es zeigt:
- Figur 1: eine räumliche Darstellung einer ersten Ausführungsform einer Drei-Punkt-Aufhängung und
- Figur 2: eine räumliche Darstellung einer zweiten Ausführungsform einer Drei-Punkt-Aufhängung.

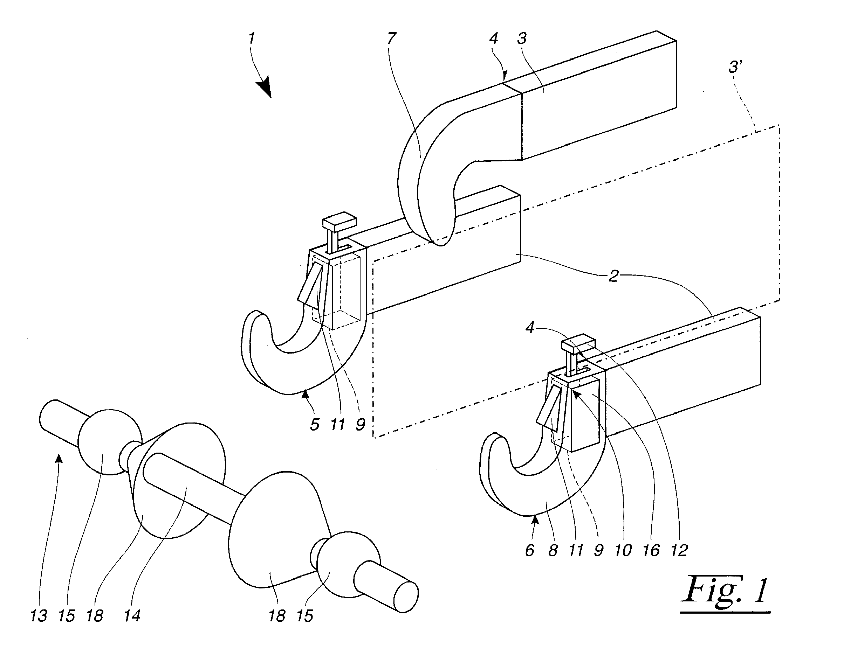

Die Figur 1 zeigt eine Drei-Punkt-Aufhängung 1 für einen nicht dargestellten Ackerschlepper. Die Drei-Punkt-Aufhängung 1 weist zwei Unterlenker 2 und einen Oberlenker 3 auf. Sowohl Unter- als auch Oberlenker 2, 3 weisen an ihren freien Endbereichen 4 jeweils Haken 5, 6, 7 auf. Der Haken 7 des Oberlenkers besitzt einen nicht dargestellten Verschlussmechanismus.

Die Haken 5, 6 der Unterlenker 2 sind zu einer durch den Oberlenker 3 verlaufenden Vertikalebene 3' spiegelsymmetrisch ausgebildet und werden im Folgenden gemeinsam beschrieben. Jeder der Haken 5, 6 weist jeweils einen Hakenkörper 8 auf, der aus massivem Eisenmetall gefertigt ist. Aus diesem Hakenkörper 8 ist ein Aufnahmeraum 9 geformt. Dieser Aufnahmeraum 9 dient zur Aufnahme eines Verschlussmechanismus 10. Von diesem Verschlussmechanismus 10 sind lediglich eine Sperrnocke 11 und eine Handhabe 12 zu sehen. Die Sperrnocke 11 kann in einer Verschlussstellung den Raum oberhalb des Hakenkörpers 8 übergreifen und damit ein angekuppeltes Gerät 13 sichern. In einer in den Aufnahmeraum 9 zurückgezogenen Lösestellung kann das Gerät 13 dagegen entfernt werden. Das angekuppelte Gerät 13 ist lediglich angedeutet dargestellt. Es weist eine Quertraverse 14 auf, welche mit Kupplungskugeln 15 und Fangschalen 18 versehen ist. Diese Kupplungskugeln 15 greifen in die Haken 5, 6 der Unterlenker 2 und werden oberseitig von den Sperrnocken 11 übergriffen. Die Fangschalen 18 führen das Gerät 13 beim Ankuppeln zu den Haken 5, 6.

Um das Gerät 13 wieder entnehmen zu können, müssen die Sperrnocken 11 zurückgezogen werden. Zu diesem Zweck weist der Verschlussmechanismus 10 die Handhabe 12 auf. Diese ist mechanisch mit der Sperrnocke 11 gekoppelt. Die genaue Funktion und der Aufbau des Verschlussmechanismus 10 sind in der EP 11 009 495 beschrieben.

Der Aufnahmeraum 9 ist beim linken Fanghaken 5 linksseitig geöffnet und durch einen Deckel 16 verschlossen. Der rechte Fanghaken 6 weist dagegen einen rechtsseitig geöffneten Aufnahmeraum 9 auf, der ebenfalls von einem Deckel 16 verschlossen ist. Beide Deckel 16 befinden sich dabei im Außenraum der Drei-Punkt-Aufhängung 1. Damit wird erreicht, dass der Hakenkörper 8 im Innenraumbereich der Drei-Punkt-Aufhängung 1 durchgängig ausgebildet ist, so dass die Deckel 16 entsprechend geringeren Torsionsmomenten widerstehen müssen.

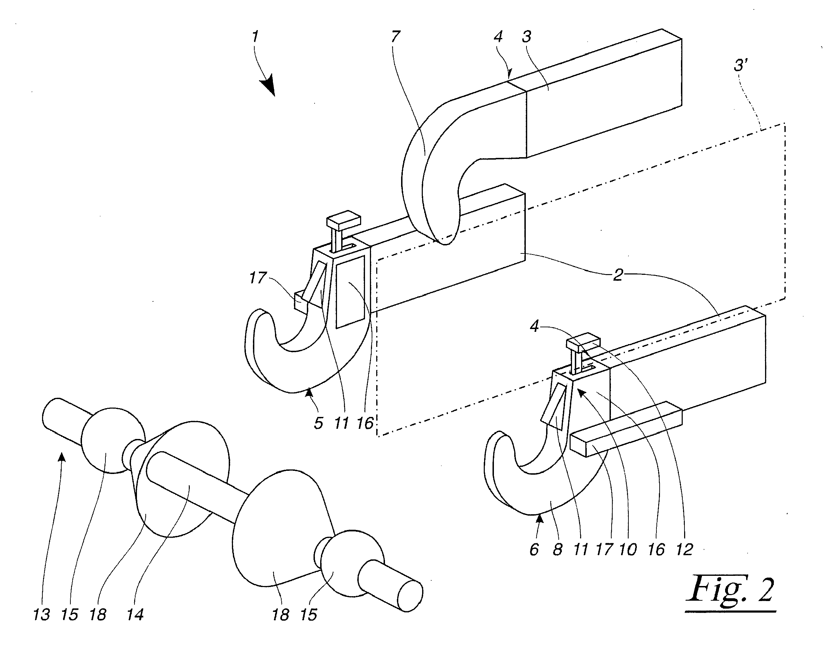

Die Figur 2 zeigt eine alternative Ausführungsform der Drei-Punkt-Aufhängung gemäß Figur 1, wobei gleiche Bezugszeichen gleiche Teile benennen. Im Folgenden wird lediglich auf die Unterschiede zur Ausführungsform gemäß Figur 1 eingegangen. Bei dieser Ausführungsform sind die Deckel 16 jeweils innenseitig zur Drei-Punkt-Aufhängung 1 angeordnet. Um die Deckel 16 dennoch vor zu großen Torsions- und Biegemomenten zu schützen, weisen die Unterlenker 2 wenigstens im Bereich des Aufnahmeraums 9 außenseitig Verstärkungen 17 auf. Diese Verstärkung 17 ist in Form einer sich in Längsrichtung des Unterlenkers 2 erstreckenden Rippe ausgebildet. Da beide Rippen jeweils im Außenraum zur Drei-Punkt-Aufhängung 1 vorgesehen sind, stören sie den Ankuppelvorgang des Gerätes 13 nicht. Insbesondere werden die Fangschalen 18 nicht durch diese außenseitig liegenden Rippen 17 behindert.

### Bezugszeichenliste

- 1: Drei-Punkt-Aufhängung
- 2: Unterlenker
- 3: Oberlenker
- 3': Vertikalebene
- 4: freier Endbereich
- 5: Haken des Unterlenkers
- 6: Haken des Unterlenkers
- 7: Haken des Oberlenkers
- 8: Hakenkörper
- 9: Aufnahmeraum
- 10: Verschlussmechanismus
- 11: Sperrnocke
- 12: Handhabe
- 13: Gerät
- 14: Quertraverse
- 15: Kupplungsgskugel
- 16: Deckel
- 17: Verstärkung
- 18: Fangschale

## Patentansprüche

1. Drei-Punkt-Aufhängung eines Ackerschleppers zum Befestigen eines Gerätes (13), wobei die Drei-Punkt-Aufhängung (1) Unterlenker (2) und mindestens einen Oberlenker (3) aufweist, und die Unterlenker (2) an ihren Endbereichen (4) zum Halten des Gerätes (13) Haken (5, 6) aufweisen, die jeweils mindestens einen Hakenkörper (8) und mindestens einen Deckel (16) aufweisen, zwischen denen mindestens ein Aufnahmeraum (9) vorgesehen ist, in dem mindestens ein Verschlussmechanismus (10) vorgesehen ist, **dadurch gekennzeichnet, dass** die Haken (5, 6) unterschiedlich aufgebaut sind, wobei die Deckel (16) beider Haken (5, 6) symmetrisch zu einer durch den mindestens einen Oberlenker verlaufenden Vertikalebene (3') angeordnet sind.

2. Drei-Punkt-Aufhängung nach Anspruch 1, **dadurch gekennzeichnet, dass** die Deckel (16) außenseitig zur Drei-Punkt-Aufhängung (1) angeordnet sind.

3. Drei-Punkt-Aufhängung nach Anspruch 1 oder 2, **dadurch gekennzeichnet, dass** die Hakenkörper zumindest im Bereich des mindestens einen Aufnahmeraums (9) verstärkt sind.

4. Drei-Punkt-Aufhängung nach Anspruch 3, **dadurch gekennzeichnet, dass** die Verstärkung (17) mindestens eine Rippe aufweist, die im Wesentlichen längs zum Unterlenker (2) verläuft.
